Europäisches Patentamt

European Patent Office

Office européen des brevets

(19)

(11) Veröffentlichungsnummer: **0 150 504**
**A1**

(12) ## EUROPÄISCHE PATENTANMELDUNG

(21) Anmeldenummer: 84116370.2

(22) Anmeldetag: 27.12.84

(51) Int. Cl.⁴: **F 16 L 9/12,** F 16 L 9/00, F 16 L 11/00, E 04 D 13/04

(30) Priorität: 12.01.84 DE 3400794

(43) Veröffentlichungstag der Anmeldung: 07.08.85 Patentblatt 85/32

(84) Benannte Vertragsstaaten: **AT BE CH DE FR GB IT LI NL SE**

(71) Anmelder: **Vetter, Ludwig, Thalstrasse 14/I, D-7991 Eriskirch (DE)**

(72) Erfinder: **Vetter, Ludwig, Thalstrasse 14/I, D-7991 Eriskirch (DE)**

(74) Vertreter: **Hübner, Hans-Jürgen, Dipl.-Ing., Mozartstrasse 21, D-8960 Kempten (DE)**

(54) **Starres Rohr, insbesondere Regenablaufrohr.**

(57) Ein Rohr (10) besteht abwechselnd aus zylindrischen Abschnitten (12) größeren Durchmessers und zylindrischen Abschnitten (14) kleineren Durchmessers, wobei die Durchmesser so gewählt sind, daß der Außendurchmesser der Abschnitte (14) kleineren Durchmessers mindestens gleich dem Innendurchmesser der Rohrabschnitte (12) größeren Durchmessers ist.

Die Rohre (10) können nur eine Standardlänge aufweisen. Eine genaue Anpassung an die Montagehöhe ist durch Abschneiden von Rohrstücken möglich, wobei das verbleibende Rohrstück weiter verwendet werden kann, nachdem der erste Übergangsabschnitt (20) abgesägt wird.

Die Erfindung betrifft ein starres, axial einteiliges, gerades oder gebogenes Rohr, insbesondere
Regenablaufrohr, das ein Einsteckende und ein gegenüberliegendes Aufsteckende aufweist, dessen Innendurchmesser etwa gleich dem Außendurchmesser des Einsteckendes ist.

Aus der CH-A-436 877 ist ein solches Rohr bekannt.
Die Länge des Einsteckendes beträgt etwa die Hälfte
der gesamten Rohrlänge. Das Aufsteckende und das
Einsteckende sind etwa gleich lang, sodaß die halbe
Rohrlänge jedes Rohres in das benachbarte Rohr eingefahren ist. Die Rohre können bis zu 6m lang sein.

Aus dem DE-U-7 002 064 ist ein ähnliches starres Rohr
bekannt, bei dem das Aufsteckende in den zwischen beiden Enden liegenden Rohrbereich absatzfrei übergeht
und ein kurzes Einsteckende vorgesehen ist.

Aus der DE-A-62 953, US-A-1 001 842 und US-A-2 523 881
sind nicht-starre, nämlich flexible Rohre bekannt, die
sich aus einer Vielzahl von ineinander gesteckten
kurzen und begrenzt schwenkbar miteinander verbundenen
Formhohlkörpern zusammensetzen.

Die einstückigen Rohre des ersterwähnten Typs lassen
sich zu einem beliebig langen Rohrstrang zusammenstecken. Zur Anpassung an die baulichen Gegebenheiten müssen sie häufig an der Baustelle gekürzt werden. Die Abfallstücke können nur unter Verwendung von separaten Doppelmuffen weiterverwendet werden, die aber zusätzliche Abdichtungsprobleme aufwerfen. In der Praxis verwendet man daher genormte Längen von 2m, 1m und 0,5m und wirft Abfälle fort. Dieses Prinzip verkompliziert die Lagerhaltung.

Die flexiblen vielteiligen Rohre lassen sich mit normalem Handwerkzeug an der Baustelle überhaupt nicht kürzen und sind auch nicht dafür vorgesehen. Zwar wäre denkbar, ein langes starres Rohr aus einer Vielzahl von kurzen Formstücken nach dem Prinzip des flexiblen Rohres zusammenzusetzen, um die gewünschte Längenanpassung zu erhalten, jedoch wären die Abdichtungsprobleme unüberwindlich, der Montageaufwand groß und die Steifigkeit des zusammengesetzten Rohres zu gering.

Aufgabe der Erfindung ist es, das Rohr mit den eingangs genannten Merkmalen so auszubilden, daß auch nach dem Kürzen eines Rohres eine paßgenaue Montage auf einfache Weise erreicht wird und der Rohrabfall trotz Verwendung von standardisierten Rohrlängen minimal gehalten wird.

Diese Aufgabe wird erfindungsgemäß dadurch gelöst, daß der zwischen Einsteckende und Aufsteckende liegende Bereich des Rohres eine Vielzahl in axialer Richtung ohne Überlappung unmittelbar aneinander grenzender zylindrischer Rohrabschnitte aufweist, die abwechselnd den Durchmesser des Aufsteckendes und den des Einsteckendes haben.

Die Erfindung ermöglicht die Verwendung von Rohren mit einer Standardlänge von z.B. 6m. Wird zur Anpassung ein Rohr gekürzt, so kann das Abfallstück nach einem zweiten Schnitt weiterverwendet werden, wobei der tatsächliche Abfall nur gleich etwa der Länge eines Rohrabschnittes von z.B. 10 cm ist. Die Lagerhaltung wird vereinfacht, die Montage verbilligt und der Abfall minimiert.

Gemäß einer Ausgestaltung der Erfindung sind die aneinandergrenzenden Rohrabschnitte kleineren und größeren Durchmessers etwa gleich lang ausgebildet. Jeder dieser Rohrabschnitte hat etwa eine Länge von minimal 10 cm bis maximal 25 cm.

Zwischen zwei benachbarten Rohrabschnitten kleineren und größeren Durchmessers befindet sich jeweils ein etwa konischer Übergangsabschnitt, der sich auch aus einer im Schnitt konkaven und daran angrenzenden
konvexen Krümmung zusammensetzen kann. In jedem
Fall liegen die Übergangsabschnitte spitzwinklig
zur Rohrachse und der Winkel dieser Übergangsabschnitte liegt im Bereich zwischen etwa 10° und
etwa 30°. Vorzugsweise beträgt der Winkel 15°.

Schließlich besteht noch ein vorteilhaftes Merkmal
darin, daß das Einsteckende des nichtgekürzten Rohres
länger ausgebildet ist als die auf dem Durchmesser
des Einsteckendes liegenden Rohrabschnitte und zwar
ist das Einsteckende vorzugsweise doppelt so lang wie
diese Rohrabschnitte, wodurch sich der Vorteil ergibt, daß die Übergangsstelle zwischen zwei ineinander gesteckten Rohren nicht mehr sichtbar ist.

Die Rohre gemäß der Erfindung können aus Kunststoff
oder Metallblech bestehen. Als Metall eignet sich
Aluminium, Kupfer, verzinktes Stahlblech, Zink und
Edelstahl. Ein Blechzuschnitt wird an beiden Längsrändern gefalzt und rundgebogen. Anschließend erfolgt
das Prägen der Abschnitte von außen nach innen oder
umgekehrt.

Ein besonders vorteilhaftes Merkmal besteht darin,
daß es aus zwei vorgeprägten Blechschalen zusammengesetzt ist, die mittels zweier einander diametral
gegenüberliegender Längsfälze miteinander verbunden sind, wobei beide Blechhalbschalen hinsichtlich ihrer Formprägung und der Falze identisch sind, derart, daß in der Außenansicht der Blechhalbschalen der zum Beispiel vom Einsteckende zum Aufsteckende hin gesehene linke Falz als nach innen weisender U-Falz und der rechte Falz als nach innen abgesetzter, nach außen weisender U-Falz ausgebildet sind. Die Blechhalbschalen lassen sich in einer Presse leichter prägen.

Anhand der Zeichnung, die ein Ausführungsbeispiel darstellt, sei die Erfindung näher beschrieben.

Es zeigt

Fig. 1    eine Ansicht des neuen Rohres und

Fig. 2    eine Schnittansicht einer Verbindung eines Rohres mit einem gekürzten Rohr in größerem Maßstab.

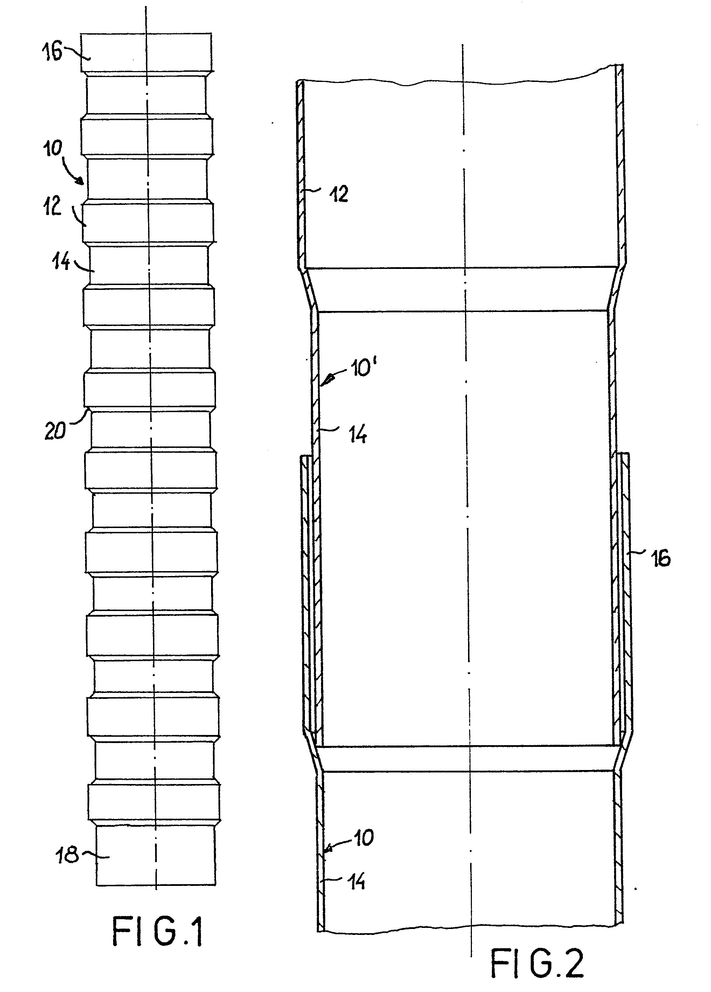

Das allgemein mit 10 bezeichnete Rohr setzt sich abwechselnd aus Rohrabschnitten 12 größeren Durchmessers und Rohrabschnitten 14 kleineren Durchmessers zusammen. Das obere Ende des Rohres 10 gemäß Fig. 1 hat ein Aufsteckende 16 und das gegenüberliegende Rohrende ist ein Einsteckende 18. Der Durchmesser des Einsteckendes 18 ist gleich dem Durchmesser der Rohrabschnitte 14 kleineren Durchmessers und der Durchmesser des Aufsteckendes 16 ist gleich dem Durchmesser der Rohrabschnitte 12 größeren Durchmessers. Die Durchmesser unterscheiden sich nur um etwa die doppelte Materialstärke des Rohres. Das Einsteckende 18 kann somit in das
Aufsteckende 16 eines benachbarten Rohres eingesteckt
werden. Das Einsteckende 18 hat etwa die doppelte Länge
der Rohrabschnitte 14 kleineren Durchmessers. Das Einsteckende 18 wird also um seine halbe axiale Länge in
den Aufsteckabschnitt 16 des nächsten Rohres eingesteckt, sodaß der freiliegende Teil des Einsteckendes
18 etwa die gleiche Länge hat wie die Rohrabschnitte
14 kleineren Durchmessers.

Zwischen aneinandergrenzenden Rohrabschnitten 12,14
großen und kleineren Durchmessers befinden sich konische oder gewölbte Übergangsabschnitte 20. Die axiale
Länge dieser Übergangsabschnitte 20 ist erheblich größer
als ihre Radialerstreckung und zwar beträgt der Winkel,
den die Übergangsabschnitte mit der Rohrachse bilden,
vorzugsweise etwa 15°. Dieser geringe Winkel ermöglicht
einen fast stetigen Übergang zwischen aneinandergrenzenden Rohrabschnitten 12,14. Dieser geringe Winkel ermöglicht ein materialschonendes Einrollen bzw. Einprägen der Rohrabschnitte 14.

Die Rohre können z.B. eine Länge von 5 m aufweisen, sodaß 25 Rohrabschnitte 12 großen Durchmessers von
je etwa 100 mm Länge und ebenfalls 25 Rohrabschnitte
14 kleineren Durchmessers mit der selben axialen
Länge gebildet werden.

Wird nun ein kürzeres Rohrstück benötigt, so wird von
einem ganzen Rohr 10 durch Abschneiden im Bereich eines Rohrabschnittes 14 kleineren Durchmessers ein Rohrstück 10' erzeugt, bei dem, wie in Fig. 2 dargestellt
ist, dieser Rohrabschnitt 14 auf drei Viertel seiner
Länge gekürzt ist. Dieser Rohrabschnitt 10' wird dann
in das Aufsteckende 16 des Rohres 10 eingesetzt. Der
Rest des abgesägten Rohres kann jederzeit weiterverwendet werden, indem ein zweiter Schnitt im Bereich
des angrenzenden Rohrabschnittes 12 größeren Durchmessers vorgesehen wird. Dabei fällt dann als Abfall ein
Ring an, der nur knapp die halbe Länge eines Rohrabschnittes hat.

Obwohl Rohre dieser Art aus einem Blechzuschnitt durch
Falzen seiner Längsränder, Rundbiegen, Schließen der
Falze und Prägen der gestuften Abschnitte hergestellt
werden können, bietet sich an, zwei identische Halbschalen zu verwenden, die in einer Presse geprägt und
mit den korrespondierenden Längsfalzen versehen werden.
Die Halbschalen werden dann paarweise zu einem Rohr
zusammengesetzt.

Kunststoffrohre können erfindungsgemäß mit denselben Vorteilen verwendet werden. Für die Herstellung ist lediglich eine mehrteilige Spritzgießform nötig.

Die Erfindung ist nicht auf gerade Rohre beschränkt. So können nach demselben Prinzip auch Rohrbögen z.B. aus 2 Halbschalen abwechselnd mit Abschnitten 12, 14 größeren und kleineren Durchmessers geprägt werden. Durch Absägen können dann z.B. aus einem 90°-Bogen zwei Bögen von angenähert 45° erzeugt werden. Insbesondere ist beinahe jede beliebige feinstufige anpaßbare Rohrleitungsneigung erzielbar.

Das abschnittweise Prägen der Rohre oder Bögen führt weiterhin zu dem Vorteil der erheblich höheren Formsteifigkeit und höheren Paßgenauigkeit, sodaß vor der Montage Rundrichtarbeiten entfallen und flach geneigte Rohre problemloser gelötet werden können. Außerdem bilden die auf kleinem Durchmesser liegenden Rohrabschnitte Ringflächen zur Aufnahme von Rohrschellen mit axialer Abstützung.

PATENTANSPRÜCHE

1. Starres, axial einteiliges, gerades oder gebogenes Rohr, insbesondere Regenablaufrohr, das ein
   Einsteckende (18) und ein gegenüberliegendes Aufsteckende (16) aufweist, dessen Innendurchmesser
   etwa gleich dem Außendurchmesser des Einsteckendes (18) ist, dadurch gekennzeichnet, daß der
   zwischen Einsteckende (18) und Aufsteckende (16)
   liegende Bereich des Rohres (10) eine Vielzahl
   in axialer Richtung ohne Überlappung unmittelbar
   aneinander grenzender zylindrischer Rohrabschnitte
   (12,14) aufweist, die abwechselnd den Durchmesser
   des Aufsteckendes (16) und den des Einsteckendes
   (18) haben.

2. Rohr nach Anspruch 1, dadurch gekennzeichnet, daß
   die aneinandergrenzenden Rohrabschnitte (12,14)
   kleineren und größeren Durchmessers etwa gleich
   lang ausgebildet sind.

0150504

3. Rohr nach Anspruch 1 oder 2, dadurch gekennzeichnet, daß sich zwischen benachbarten Rohrabschnitten (12, 14) kleineren und größeren Durchmessers etwa konische Übergangsabschnitte (20) befinden.

4. Rohr nach Anspruch 3, dadurch gekennzeichnet, daß der konische Übergangsabschnitt (20) mit der Rohrachse einen Winkel im Bereich von 10° bis 30° bildet.

5. Rohr nach Anspruch 4, dadurch gekennzeichnet, daß der Winkel des konischen Übergangsabschnittes (20) mit der Rohrachse etwa 15° beträgt.

6. Rohr nach einem der Ansprüche 1 bis 5, dadurch gekennzeichnet, daß das Einsteckende (18) länger ausgebildet ist als die auf dem Durchmesser des Einsteckendes liegenden Rohrabschnitte (14).

7. Rohr nach einem der Ansprüche 1 bis 6, dadurch gekennzeichnet, daß die axiale Länge der auf kleinerem Durchmesser liegenden Rohrabschnitte (14) im Bereich zwischen etwa 10 cm und etwa 25 cm liegt.

0150504

8. Rohr nach einem der Ansprüche 1 bis 7, dadurch gekennzeichnet, daß es aus einem rundgebogenen Blechzuschnitt besteht, dessen beide Längsränder durch einen Falz miteinander verbunden sind.

9. Rohr nach einem der Ansprüche 1 bis 7, dadurch gekennzeichnet, daß es aus zwei vorgeprägten Blechhalbschalen zusammengesetzt ist, die mittels zweier einander diametral gegenüberliegender Längsfälze miteinander verbunden sind, wobei beide Blechhalbschalen hinsichtlich ihrer Formprägung (12,14, 16,18) und der Falze identisch sind, derart, daß in der Außenansicht der Blechhalbschale der zum Beispiel vom Einsteckende (18) zum Aufsteckende (16) hin gesehene linke Falz als nach innen weisender U-Falz und der rechte Falz als nach innen abgesetzter, nach außen weisender U-Falz ausgebildet sind.

0150504

FIG.1

FIG.2

| 0150504 |
|---|

**Europäisches Patentamt**

# EUROPÄISCHER RECHERCHENBERICHT

## EINSCHLÄGIGE DOKUMENTE

EP 84116370.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | WO - A1 - 81/01 736 (NORDSTRÖM) <br> * Gesamt * <br> ---- | 1,2,3 | F 16 L 9/12 <br> F 16 L 9/00 <br> F 16 L 11/00 <br> E 04 D 13/04 |
| | | | |
| | | | **RECHERCHIERTE SACHGEBIETE (Int. Cl. 4)** |
| | | | F 16 L 9/00 <br> F 16 L 11/00 <br> F 16 L 21/00 <br> F 16 L 43/00 <br> F 16 L 47/00 <br> E 04 D 13/00 |

Der vorliegende Recherchenbericht wurde für alle Patentansprüche erstellt.

| Recherchenort | Abschlußdatum der Recherche | Prüfer |
|---|---|---|
| WIEN | 15-04-1985 | SCHUGANICH |

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82